# EUROPÄISCHE PATENTSCHRIFT

(11) **EP 0 909 603 B1**
(45) Veröffentlichungstag und Bekanntmachung des Hinweises auf die Patenterteilung: **20.11.2002**
(21) Anmeldenummer: 98118077.1
(22) Anmeldetag: 24.09.1998
(51) Int. Cl.: B23K 3/047, B62D 65/00

(54) **Vorrichtung zum Wechseln von Spannrahmen in einer Bearbeitungsstation**
Apparatus for changing clamping frames in a machining station
Dispositif pour changer des cadres de fixations dans une station d'usinage

(30) Priorität: 14.10.1997 AT 173797
(43) Veröffentlichungstag der Anmeldung: 21.04.1999
(73) Patentinhaber: VA TECH Transport- und Montagesysteme GmbH & Co, 4031 Linz (AT)
(72) Erfinder: Kreuzgruber, Dietrich, 4060 Leonding (AT)
(74) Vertreter: VA TECH Patente GmbH & Co

(56) Entgegenhaltungen:
- EP-A- 0 642 878
- DE-A- 3 606 058
- DE-A- 3 840 033

## Beschreibung

Die vorliegende Erfindung betrifft eine Vorrichtung zum Zuführen, Positionieren und Schweißen von Teilen einer Fahrzeugkarosserie in einer Bearbeitungsstation einer Fertigungsstraße, bei welcher zum Zuführen und Positionieren der Karosserieteile zu beiden Seiten der Fertigungsstraße zumindest je ein auswechselbarer Spannrahmen vorgesehen ist, wobei jeder Spannrahmen quer zur Fertigungsstraße verschiebbar und anhebbar ist und zum Aufbewahren von Spannrahmen zumindest ein Magazin vorgesehen ist, welches zumindest abschnittsweise über dem Bearbeitungsniveau der Fahrzeugkarosserie angeordnet ist.

Vorrichtungen der oben genannten Art sind bekannt und dienen dazu, an ein und derselben Fertigungsstraße zumindest zwei unterschiedliche Karosserietypen fertigen zu können. Eine Vorrichtung dieser Art ist beispielsweise in der DE OS 3 840 033 beschrieben. Bei dieser bekannten Einrichtung sind zu beiden Seiten der Fertigungsstraße zwei oder drei Spannrahmen vorgesehen, die durch einen Paternoster-Transportmechanismus in einem geschlossenen Kreislauf von einer Arbeitsposition zu einer im wesentlichen darüber befindlichen Bestückungsposition bewegt werden können. Über der Fahrzeugkarosserie sind ein oder zwei Roboter vorgesehen, welcher bzw. welche die Spannrahmen mit jenen Werkzeugen, z.B. Zangen, bestücken, die in dem nächsten Produktionszyklus benötigt werden. Bei dieser Anordnung ist es zwar möglich, Werkzeuge für Spannrahmen einzusparen und die Anzahl der benötigten Spannrahmen auf zwei oder drei zu beschränken, dennoch ist mit dem bzw. den Bestückungsrobotern und mit den bestückbaren Werkzeugen ein erheblicher Mehraufwand verbunden, sodaß die Spannrahmen sowohl in der Herstellung als auch im Betrieb teuer und wartungsaufwendig sind. Weiters ist bei dieser Einrichtung ein rascher Spannrahmenwechsel nicht möglich, da für die Bestückung (Entfernen nicht benötigter Werkzeuge, Bestücken mit den benötigten Werkzeugen) eine gewisse Zeit erforderlich ist, sodaß es im Produktionszyklus zu unerwünschten Verzögerungen kommen kann.

Weiters ist in der EP-A-642 878 eine Einrichtung zum Wechseln von Spannrahmen beschrieben, bei welcher jeder Spannrahmen mit einem Fahrwerk ausgestattet ist, welches entlang einer horizontalen Schiene in Fertigungsrichtung verfahrbar ist. Im Bereich der Zuführung und Positionierung von Karosserieteilen weist die Schiene zwei quer zur Fertigungsrichtung verfahrbare Abschnitte auf, mittels welchen der Spannrahmen mit seinem Fahrgestell in die Arbeitsposition verfahren werden kann. Die Spannrahmen weisen jedoch ein hohes Gewicht auf und sind mit vergleichsweise hohen Herstellungskosten verbunden.

In der DE-OS 3 606 058 werden Spannrahmen, die von der Bearbeitungsstation gerade nicht benötigt werden, an dem vorderen und hinteren Ende der Bearbeitungsstation zu beiden Seiten der Fertigungsstraße in je einem Viertelkreis am Boden aufgestellt. Ein Nachteil dieser Anordnung liegt unter anderem darin, daß zur Aufbewahrung der Spannrahmen vor und nach der Bearbeitungsstation vergleichsweise viel Platz beansprucht wird, welcher vielfach nicht verfügbar ist.

Es ist daher ein Ziel der vorliegenden Erfindung, eine Möglichkeit zum Wechseln von Spannrahmen zu finden, bei welcher einerseits Kosten und Gewicht eingespart werden können, andererseits auch ein rascher Spannrahmenwechsel und eine besonders platzsparende Aufbewahrung möglich sind. Insbesondere sollte die Anordnung gegebenenfalls auch in bestehende Bearbeitungsstationen integriert werden können.

Die Lösung der obigen Aufgabe ergibt sich bei einer Vorrichtung der eingangs genannten Art dadurch, daß zur Bewegung der Spannrahmen quer zur Fertigungsstraße zu deren beiden Seiten je ein angetriebener Querschlitten vorgesehen ist, an welchem je ein Spannrahmen lösbar und verriegelbar aufnehmbar ist, daß zum Anheben des Spannrahmens zu beiden Seiten der Fertigungsstraße je ein angetriebener Hebeschlitten vorgesehen ist, welcher entlang zumindest einer Schiene nach oben bzw. nach unten verfahrbar ist und an welchem ein Spannrahmen aufnehmbar ist, und daß im Bereich des Schnittpunktes der Bewegungsrichtung eines Querschlittens und des zugeordneten Hebeschlittens eine Übergabeposition vorgesehen ist, an welcher zur Übergabe eines Spannrahmens von dem Quer- auf den Hebeschlitten bzw. umgekehrt zumindest an dem Querschlitten ein Mittel zum Entriegeln bzw. Verriegeln des Spannrahmens vorgesehen ist. Dadurch, daß der Spannrahmen von dem Transportschlitten lösbar ist, kann dieser wesentlich leichter und damit auch kostengünstiger gefertigt werden. Dennoch kann ein rascher Wechsel von Spannrahmen durchgeführt werden, da keine Bestückung mit Werkzeugen erforderlich ist. Zusätzlich hat diese Lösung den Vorteil, daß zur Aufbewahrung des Spannrahmens aufgrund der geringeren Abmessungen im Vergleich zu Spannrahmen mit integrierten Fahrwerken weniger Platz beansprucht wird. Die erfindungsgemäße Lösung kann einfach in bestehende Bearbeitungsstationen integriert werden, da in Durchlaufrichtung vor und hinter der Bearbeitungsstation kein zusätzlicher Platz beansprucht wird.

Bei einer vorteilhaften Ausgestaltungsform der vorliegenden Erfindung ist über dem Bearbeitungsniveau der Fahrzeugkarosserie zumindest ein quer zur Fertigungsstraße verschiebbares Magazin für Spannrahmen angeordnet. Durch die Querverschieblichkeit des Magazins kann jeder Spannrahmen quer zur Fahrtrichtung in jede beliebige Position, z.B. in eine vorbestimmte Transportposition, gebracht werden, ohne daß der Spannrahmen selbst ein Fahrwerk aufweisen muß. Demnach ist im Bereich des Schnittpunktes der Bewegungsrichtung des Hebeschlittens und des Spannrahmenmagazins in vorteilhafter Weise eine Spannrahmenwechselposition vorgesehen, an welcher der Spannrahmen auf geeignete Aufnahmen des Magazins absenkbar bzw. von diesen Aufnahmen anhebbar ist. Durch das Absenken und Anheben des Spannrahmens auf bzw. von geeigneten Aufnahmen können komplizierte Verriegelungsmechanismen bzw. deren Steuerungen eingespart werden. Überdies besteht dadurch für darunter befindliche Personen oder Anlagenteile ein besonders geringes Sicherheitsrisiko.

Bei einem in der Praxis besonders vorteilhaft einsetzbaren Ausführungsbeispiel ist ein einziges, über der Fahrzeugkarosserie angeordnetes Magazin vorgesehen, bei welchem jedem Hebeschlitten zumindest zwei Aufnahmepositionen für Spannrahmen zugeordnet sind, wobei je einem Spannrahmen für die linke Seite der Fertigungsstraße je ein Spannrahmen der rechten Seite der Fertigungsstraße zugeordnet ist. In diesem Fall ist für die Bewegung quer zur Fertigungsstraße nur ein Antrieb und eine zugehörige Steuerung erforderlich. Bei diesem besonders vorteilhaften Ausführungsbeispiel hat es sich als besonders zweckmäßig erwiesen, wenn die Spannrahmenwechselpositionen symmetrisch zur Längsmittelebene der Fertigungsstraße und die Aufnahmepositionen einander zugeordneter Spannrahmen des Magazins in äquidistanten Abständen voneinander angeordnet sind, wobei diese Abstände dem Abstand zwischen den Spannrahmenwechselpositionen entsprechen. Bei dieser Variante kann somit trotz eines einzelnen Magazins ein Spannrahmenwechsel zu beiden Seiten der Fertigungsstraße zugleich durchgeführt werden.

Bei einer weiteren, bevorzugten Ausführungsform der erfindungsgemäßen Einrichtung sind die Hebeschlitten an bezüglich der Vertikalen geneigt angeordneten Schienen verfahrbar, wobei die Schienen bezüglich der Längsmittelebene der Fertigungsstraße symmetrisch angeordnet sind. Durch die geneigten Schienen für die Spannrahmen ist einerseits ein sicherer Sitz der Spannrahmen auf dem Hebeschlitten ohne besondere Verriegelungen, andererseits eine bessere Anordnung und eine Vergrößerung der Kapazität des Magazins möglich. Weiters sind die Querschlitten bzw. Führungseinrichtungen für die Querschlitten um je eine parallel zur Fertigungsstraße ausgerichtete Achse verschwenkbar, sodaß die Spannrahmen auch in einer geneigten Position übergeben werden können. In der verschwenkten Position des Spannrahmens wird zusätzlich die Aufnahme von Karosserieteilen beim Betrieb des Spannrahmens wesentlich erleichtert.

Bei einem besonders einfachen Ausführungsbeispiel wird das Mittel zum Verriegeln bzw. Entriegeln des Spannrahmens durch betätigbare Haltevorrichtungen oder Verriegelungsbolzen gebildet, welche an dem Quer- bzw. Hebeschlitten angeordnet sind und in zugeordnete Aufnahmen für die Haltevorrichtungen bzw. Verriegelungsbohrungen des Spannrahmens eingreifen, wobei an jedem Spannrahmen zumindest zwei Aufnahmen für die Haltevorrichtungen oder Verriegelungsbohrungen und an jedem Quer- bzw. Hebeschlitten zumindest je zwei Haltevorrichtungen bzw. Verriegelungsbolzen vorgesehen sind. Weiters besitzt jeder Spannrahmen eine Energieversorgung, z.B. für elektrische u. hydraulische od. pneumatische Energie, welche bei Übergabe des Spannrahmens von dem Hebe- auf den Querschlitten über eine Kupplung, z.B. eine Multikupplung, an den Querschlitten ankoppelbar ist, sodaß eine Übergabe vollautomatisch und in kürzest möglicher Zeit durchgeführt werden kann, wobei der Spannrahmen unmittelbar nach Übergabe bereits voll funktionsfähig ist.

In der Bearbeitungsstation ist eine Arbeitsposition für den Spannrahmen vorgesehen, an welcher der Spannrahmen mit der Bearbeitungsstation exakt ausgerichtet und an dieser verankert wird, wogegen bei der Übergabe von dem Quer auf den Hebeschlitten und umgekehrt keine besonderen Toleranzen eingehalten werden müssen. Im Bereich der Arbeitsposition des Spannrahmens kann weiters ein Mittel zur Gewichtsentlastung des Spannrahmens in Abhängigkeit von seinem Gewicht vorgesehen sein, welches in Abhängigkeit von dem vorbestimmten Gewicht des aktuellen Spannrahmens angesteuert ist, um eine möglichst verschleißarme Ausrichtung des Spannrahmens mit der Bearbeitungsstation zu ermöglichen. In vorteilhafter Weise kann das Mittel zur Gewichtsentlastung als ein Abschnitt der Führungseinrichtung ausgebildet und die Gewichtsentlastung durch Verschwenken dieser Führungseinrichtung um die zugeordnete Längsachse durchführbar sein.

Im folgenden wird an Hand der beiliegenden Figuren ein nicht einschränkendes Ausführungsbeispiel der erfindungsgemäßen Vorrichtung beschrieben, wobei die Figuren folgendes zeigen:
Fig. 1 eine perspektivische Darstellung eines Ausführungsbeispiels für die erfindungsgemäße Vorrichtung,
die Figuren 2, 3 und 4, die Vorrichtung von Fig. 1 in einer Ansicht von vorne bzw. hinten, von der Seite und von oben,
Figuren 5, 6 und 7 je eine Ansicht der Vorrichtung in Richtung Fertigungsstraße in unterschiedlichen Positionen bei einem Spannrahmenwechsel.

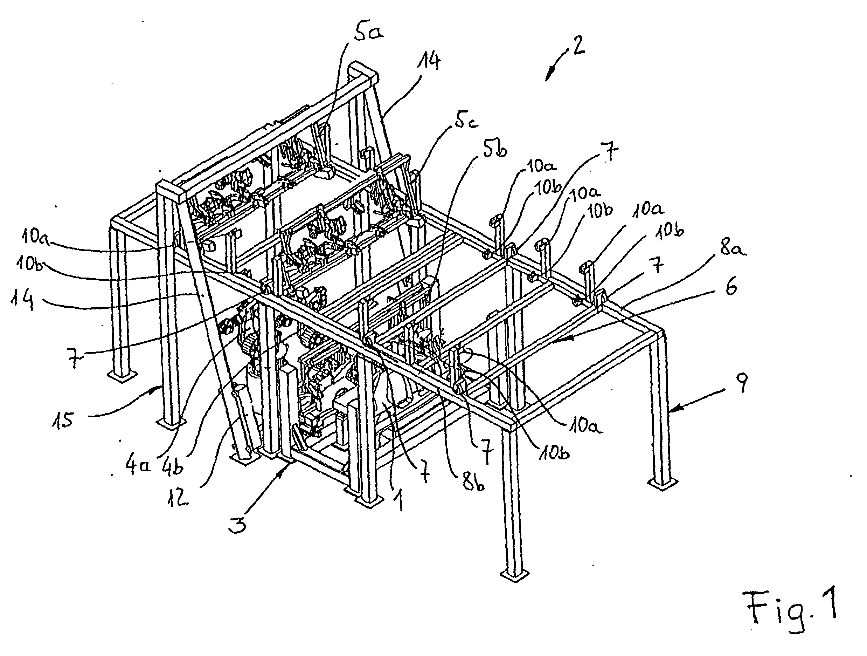

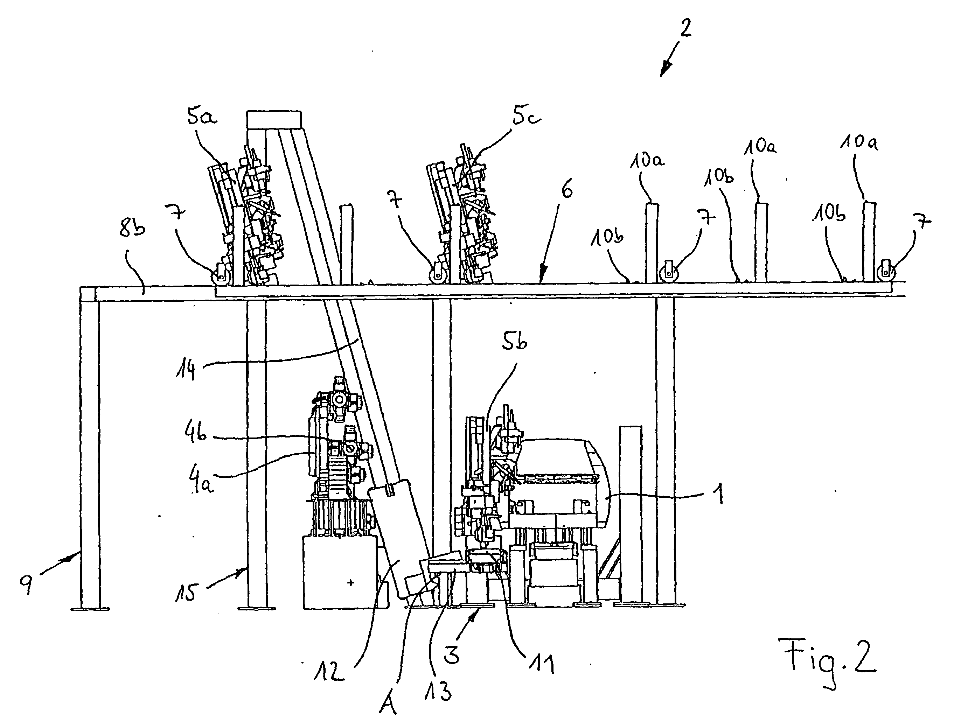

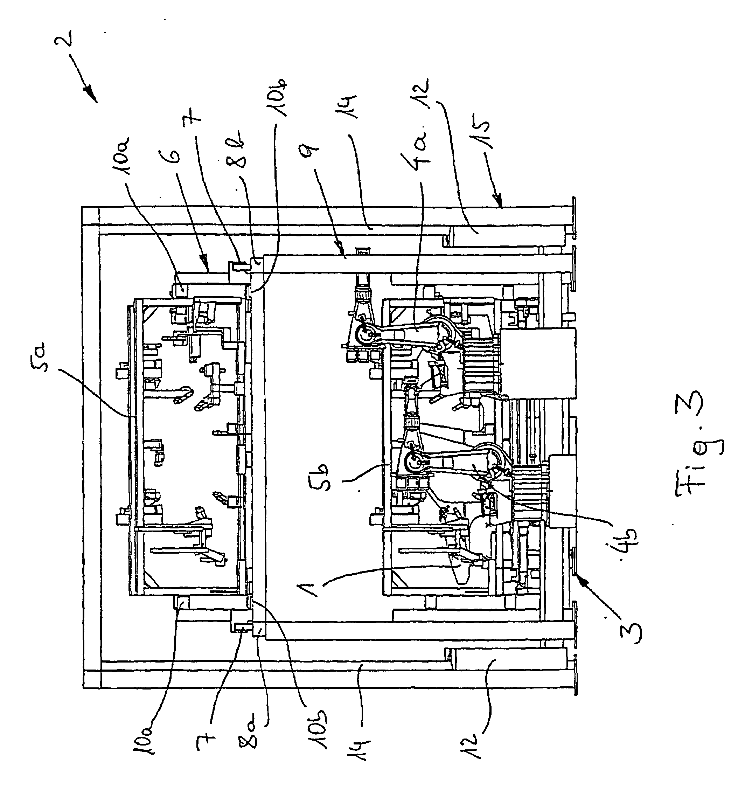

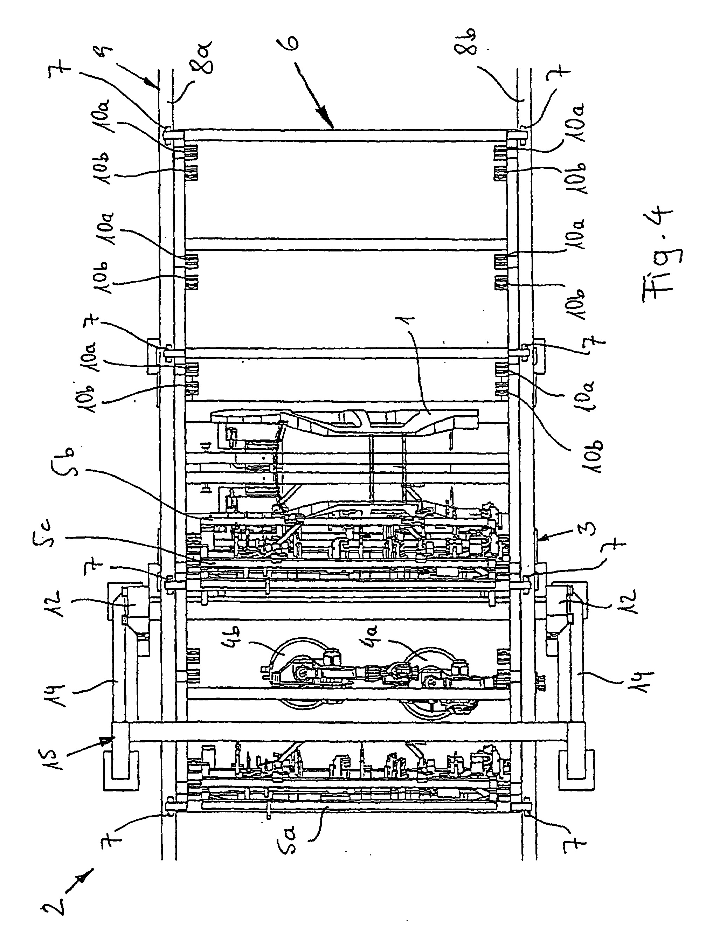

In den Figuren 1 - 4 ist eine Vorrichtung zum Zuführen, Positionieren und Schweißen von Teilen einer Fahrzeugkarosserie 1 in einer Bearbeitungsstation 2 einer Fertigungsstraße dargestellt, wobei der Einfachheit halber nur die linke Seite der Fertigungsstraße vollständig dargestellt ist.

Die in den Figuren dargestellte Bearbeitungsstation 2 weist eine Schweißzelle 3 auf, die mit (nicht näher dargestellten) Förderungseinrichtungen für Karosserieteile und Schweißrobotern 4a, 4b zusammenwirkt.

Zum Zuführen und Positionieren von Karosserieteilen in die Schweißzelle sind eine Mehrzahl von Spannrahmen 5a, 5b, 5c vorgesehen, welche mit geeigneten Werkzeugen z. B. Zangen, Spannern und dergleichen, versehen sind. Der Spannrahmen 5b befindet sich in seiner Arbeitsposition, wogegen die Spannrahmen 5a und 5c sich in einem oberhalb der Bearbeitungsstation angeordneten Magazin 6 befinden.

Das Spannrahmenmagazin 6 ist quer zur Fertigungsstraße verfahrbar. Zu diesem Zweck sind bei dem gezeigten Ausführungsbeispiel zu beiden Seiten des Magazins 6 Rollen 7 vorgesehen, welche an Querträgern 8a, 8b eines Rahmens 9 für das Spannrahmenmagazin 6 quer zur Fertigungsstraße geführt sind. In dem Spannrahmenmagazin 6 sind bei dem dargestellten Ausführungsbeispiel zu beiden Seiten der Fertigungsstraße je drei Aufnahmepositionen für die Spannrahmen vorgesehen, welche durch geeignete Aufnahmeelemente 10a, 10b gebildet werden. Die Aufnahmeelemente 10a, 10b sind so ausgestaltet, daß die Spannrahmen von oben auf diese Elemente abgesenkt bzw. von diesen Elementen nach oben angehoben werden können. Die Anzahl der Spannrahmenmagazine bzw. die Aufnahmepositionen je Magazin können im Rahmen der vorliegenden Erfindung jedoch beliebig gewählt werden, insbesondere ist es möglich, für jede Seite der Fertigungsstraße je ein oder mehrere Spannrahmenmagazine vorzusehen, die entsprechend verfahrbar sind.

Zur Bewegung der Spannrahmen 5a, 5b, 5c von ihrer Arbeitsposition in das Magazin bzw. umgekehrt sind zu beiden Seiten der Fertigungsstraße je ein Querschlitten 11 und je ein Hebeschlitten 12 angeordnet, an welchen je ein Spannrahmen 5a, 5b oder 5c lösbar und verriegelbar aufgenommen werden kann. Zur Verriegelung eines Spannrahmens 5a, 5b, 5c mit einem zugeordneten Schlitten kann jedes geeignete, dem Fachmann bekannte Verriegelungsmittel eingesetzt werden, z. B. Verriegelungsbolzen und zugeordnete Verriegelungsbohrungen.

Der Querschlitten 11 ist mit einem (nicht näher dargestellten) Antrieb versehen und quer zur Fertigungsrichtung zwischen zumindest zwei Positionen verfahrbar, nämlich einer der Karosserie 1 zugewandten Arbeitsposition und einer dem Hebeschlitten 12 zugewandten Übergabeposition. Hiezu ist eine geeignete Führungseinrichtung 13, z. B. quer zur Fertigungsrichtung angeordnete Schienen, vorgesehen.

Der ebenso mit einem (nicht näher dargestellten) Antrieb versehenen Hebeschlitten 12 ist mit geeigneten Aufnahmen und Verriegelungen für den Spannrahmen ausgestattet und kann zwischen zwei Positionen, nämlich einer dem Querschlitten 11 zugewandten Übergabeposition und einer dem Magazin 6 zugewandten Spannrahmenwechselposition verfahren werden, wobei die Spannrahmenwechselposition mehrere Unterpositionen aufweisen kann. Zum Heben und Senken des Spannrahmens mittels des Hebeschlittens 12 ist eine geeignete Führungseinrichtung 14 vorgesehen, welche bei dem gezeigten Ausführungsbeispiel durch zwei bezüglich der vertikalen geneigt angeordnete Schienen gebildet wird, welche durch einen Rahmen 15 abgestützt sind. Der Rahmen 15 kann gegebenenfalls mit dem Rahmen 9 für das Spannrahmenmagazin 6 gekoppelt bzw. mit diesem integriert ausgebildet sein. Die Neigung der Schienen kann im Rahmen der vorliegenden Erfindung jedoch beliebig gewählt werden, wobei diese auch vertikal angeordnet sein können.

Zur Übergabe eines zu wechselnden Spannrahmens 5a, 5b, 5c von dem Querschlitten 11 auf den Hebeschlitten 12 ist im Bereich des Schnittpunktes der Bewegungsrichtungen dieser Schlitten 11, 12 eine Übergabeposition vorgesehen, an welcher der Querschlitten und der Hebeschlitten einander unmittelbar benachbart angeordnet sind, sodaß die Verriegelungen des Spannrahmens an dem Querschlitten 11 gelöst und die Verriegelungen des Spannrahmens an dem Hebeschlitten 12 aktiviert werden können. Bei dem gezeigten Ausführungsbeispiel findet die Übergabe in einer bezüglich der vertikalen geneigten Position des Spannrahmens statt. Zu diesem Zweck ist die Führungseinrichtung 13 für den Querschlitten 11 um eine parallel zur Fertigungsstraße ausgerichtete Achse A verschwenkbar angeordnet. Das Transportieren des Spannrahmens in einer bezüglich der vertikal geneigten Position hat einerseits den Vorteil, daß der Spannrahmen an dem Hebeschlitten sicheren und festen Sitz aufweist, andererseits in dem Spannrahmenmagazin 6 eine größere Anzahl von Aufnahmepositionen für Spannrahmen geschaffen werden kann. Die geneigte Anordnung des Spannrahmens auf dem Querschlitten hat weiters den Vorteil, daß dadurch Karosserieteile leichter von den Transporteinrichtungen auf den Spannrahmen übergeben und dort positioniert werden können.

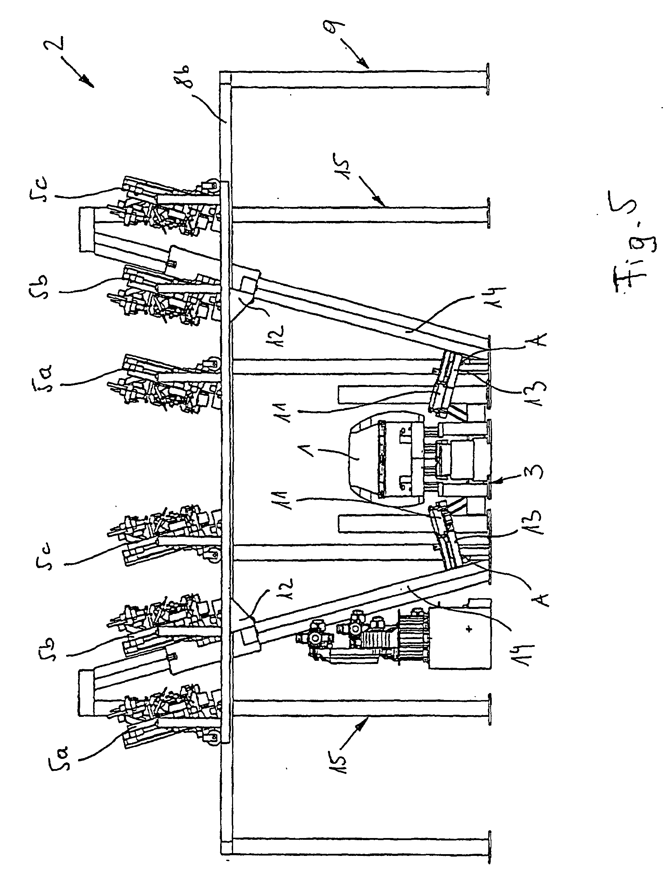

Im folgenden wird, insbesondere mit Bezug auf die Figuren 5 - 7, der Zyklus eines Spannrahmenwechsels im Detail erläutert.

Ausgehend von der in den Figuren 1, 2 und 3 dargestellten Arbeitsposition des Spannrahmens 5b wird dieser durch Verschwenken der Führungseinrichtung 13 und des Querschlittens 11 in der oben beschriebenen Weise auf den Hebeschlitten 12 übergeben, mittels welchem der Spannrahmen 5b entlang der Führungen 14 zu dem Spannrahmenmagazin 6 angehoben wird. Dabei ist das gesamte Spannrahmenmagazin 6 bezüglich der Spannrahmenwechselposition um ein bestimmtes Maß quer zur Fahrtrichtung verschoben, sodaß die an dem Spannrahmen 5b angeordneten Gegenelemente für die Aufnahmen 10a, 10b nicht mit diesen kollidieren. Der Spannrahmen 5b wird auf eine solchen Höhe angehoben, daß seine Gegenelemente für die Aufnahmen 10a, 10b im wesentlichen über diesen angeordnet sind. Sodann wird das Magazin quer zur Fertigungsstraße um ein bestimmtes Maß verschoben, sodaß die Gegenelemente des Spannrahmens 5b mit den zugeordneten Aufnahmen 10a, 10b des Spannrahmenmagazins entlang einer Geraden ausgerichtet sind, welche parallel zu der Führungseinrichtung 14 verläuft. In der Folge wird der Hebeschlitten 12 um ein bestimmtes Maß abgesenkt, bis die Gegenelemente des Spannrahmens 5b an den zugeordneten Aufnahmen 10a, 10b aufliegen (Fig. 5).

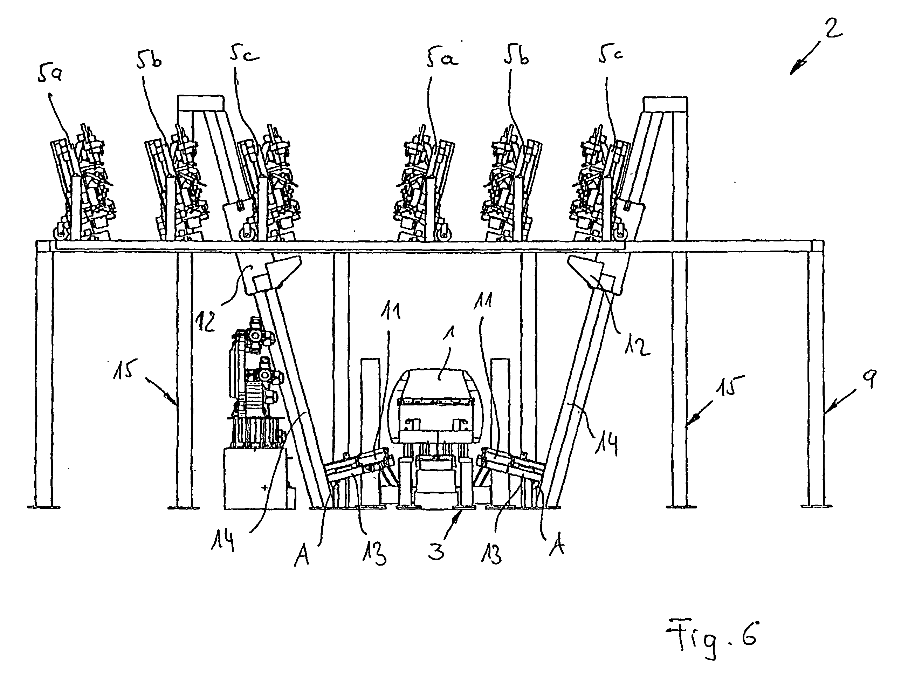

Danach kann die Verriegelung des Spannrahmens 5b mit dem Hebeschlitten 12 gelöst und der Hebeschlitten gegebenenfalls nach unten abgesenkt werden. Zur Aufnahme des in der Schweißzelle 3 benötigten Spannrahmens 5c wird nun das Spannrahmenmagazin 6 quer zur Fertigungsstraße verschoben, bis dieser Spannrahmen 5c sich an der Spannrahmenwechselposition befindet (Fig. 6). An dieser Position sind die Verriegelungselemente des Spannrahmens 5c mit den Verriegelungen des Hebeschlittens 12 so ausgerichtet, daß die Verriegelung, gegebenenfalls nach Anheben des Hebeschlittens 12, aktiviert werden kann. Sodann wird der Spannrahmen 5c durch den Hebeschlitten 12 ein bestimmtes Maß nach oben angehoben, bis sich die Gegenelemente von den zugeordneten Aufnahmen 10a, 10b lösen und das Spannrahmenmagazin 6 um ein bestimmtes Maß quer zur Fertigungsrichtung verschoben werden kann, um beim nachfolgenden Absenken des Spannrahmens 5c eine Kollision der Gegenelemente mit den zugeordneten Aufnahmen 10a, 10b zu vermeiden.

Der Hebeschlitten 12 wird bis zur Übergabeposition abgesenkt, wo eine Übergabe des Spannrahmens 5c auf den Querschlitten 11 durch Lösen der Verriegelungen an dem Hebeschlitten und durch Betätigen der Verriegelungen an dem Querschlitten durchgeführt werden kann. Der Spannrahmen 5c wird sodann durch Verfahren des Querschlittens 11 und durch Verschwenken der Führungseinrichtung 13 um die Achse A in seine Arbeitsposition gebracht (analog zum Spannrahmen 5b der Figuren 1 - 4). Gegebenenfalls wird vor dem Verschwenken des Spannrahmens 5b in seine vertikale Position eine Bestückung mit einem in der Schweißzelle zu positionierenden Karosserieteil durchgeführt. Die exakte Ausrichtung des Spannrahmens 5b mit der Schweißzelle erfolgt in seiner Arbeitsposition, wobei hierfür zur Verringerung des Verschleißes eine Gewichtsentlastung vorgesehen ist, welche beispielsweise durch Verschwenken der Führungseinrichtung 13 um die Achse A in Abhängigkeit von dem vorbestimmten Gewicht des Spannrahmens durchgeführt werden kann.

Alle oben beschriebenen Transport- Übergabe, Wechsel- und Ausrichtungsvorgänge werden durch eine (nicht dargestellte) zentrale, für einen Fachmann an sich bekannte Steuerungseinrichtung angesteuert.

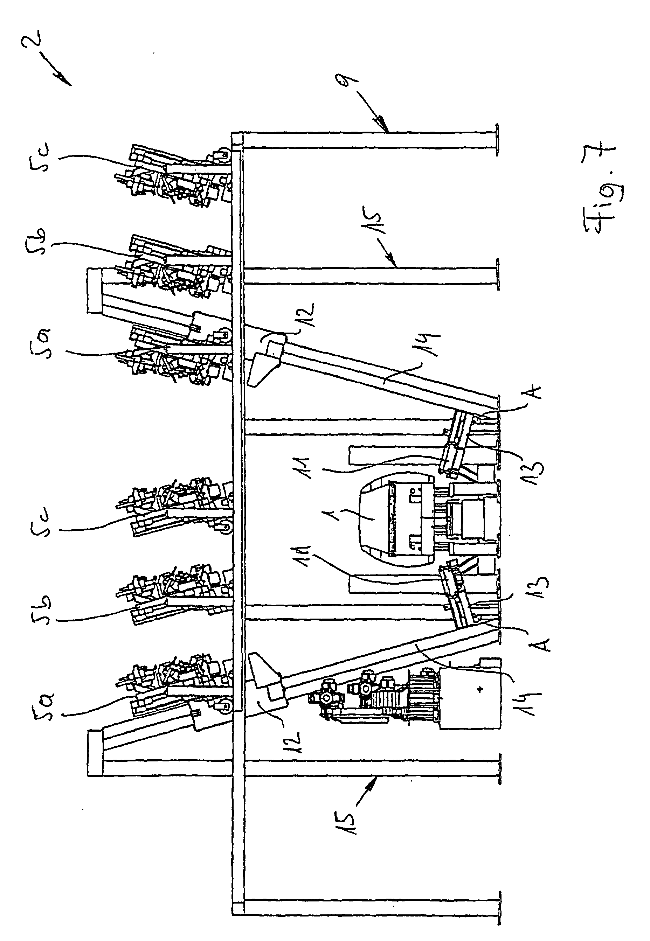

In Fig. 7 ist ein Spannrahmenwechsel analog zu Fig. 6 dargestellt, bei welchem anstelle des Spannrahmens 5c der Spannrahmen 5a in seine Arbeitsposition gebracht wird.

Abschließend ist noch zu bemerken, daß das oben mit Bezug auf die Figuren beschriebene Ausführungsbeispiel in keiner Weise einschränkend ist. Beispielsweise ist es möglich, daß ein Spannrahmen anstelle starrer Aufnahmeelemente durch geeignete betätigbare Aufnahme- oder Festhalteeinrichtungen, (wie z. B. Verriegelungsbolzen oder verschwenkbare Haken) in dem Magazin aufgenommen sind, sodaß bei einem Wechsel ein Anheben und Absenken des Spannrahmens bzw. ein Verfahren des Spannrahmenmagazins unterbleiben kann. Ferner ist die Anzahl der Spannrahmenmagazine bzw. die Anzahl der Aufnahmepositionen je Spannrahmenmagazin in keiner Weise eingeschränkt. Ebenso kann die Neigung der Führungen für den Hebeschlitten beliebig gewählt werden, gegebenenfalls können diese Führungen auch senkrecht angeordnet sein.

## Patentansprüche

1. Vorrichtung zum Zuführen, Positionieren und Schweißen von Teilen einer Fahrzeugkarosserie (1) in einer Bearbeitungsstation (2) einer Fertigungsstraße, bei welcher zum Zuführen und Positionieren der Karosserieteile zu beiden Seiten der Fertigungsstraße zumindest je ein auswechselbarer Spannrahmen (5a, 5b, 5c) vorgesehen ist, wobei jeder Spannrahmen (5a, 5b, 5c) quer zur Fertigungsstraße verschiebbar und anhebbar ist und zum Aufbewahren von Spannrahmen (5a, 5b, 5c) zumindest ein Magazin (6) vorgesehen ist, welches zumindest abschnittsweise über dem Bearbeitungsniveau der Fahrzeugkarosserie (1) angeordnet ist, **dadurch gekennzeichnet, daß** zur Bewegung der Spannrahmen (5a, 5b, 5c) quer zur Fertigungsstraße zu deren beiden Seiten je ein angetriebener Querschlitten (11) vorgesehen ist, an welchem je ein Spannrahmen (5a, 5b, 5c) lösbar und verriegelbar aufnehmbar ist, daß zum Anheben des Spannrahmens (5a, 5b, 5c) zu beiden Seiten der Fertigungsstraße je ein angetriebener Hebeschlitten (12) vorgesehen ist, welcher entlang zumindest einer Führungseinrichtung (14) nach oben bzw. nach unten verfahrbar und an welchem ein Spannrahmen (5a, 5b, 5c) aufnehmbar ist, und daß im Bereich des Schnittpunktes der Bewegungsrichtung eines Querschlittens (11) und des zugeordneten Hebeschlittens (12) eine Übergabeposition vorgesehen ist, wobei zur Übergabe eines Spannrahmens (5a, 5b, 5c) von dem Quer- (11) auf den Hebeschlitten (12) bzw. umgekehrt zumindest an dem Querschlitten (11) ein Mittel zum Entriegeln bzw. Verriegeln des Spannrahmens (5a, 5b, 5c) vorgesehen ist.

2. Vorrichtung nach Anspruch 1, **dadurch gekennzeichnet, daß** über dem Bearbeitungsniveau der Fahrzeugkarosserie (1) zumindest ein quer zur Fertigungsstraße verschiebbares Magazin (6) für Spannrahmen (5a, 5b, 5c) angeordnet ist, welches Aufnahmeeinrichtungen (10a, 10b) für zumindest je zwei Spannrahmen für jede Seite der Fertigungsstraße (5a, 5b, 5c) aufweist.

3. Vorrichtung nach Anspruch 2, **dadurch gekennzeichnet, daß** im Bereich des Schnittpunktes der Bewegungsrichtung des Hebeschlittens (12) und des Spannrahmenmagazins (6) eine Spannrahmenwechselposition vorgesehen ist, an welcher der Spannrahmen auf geeignete Aufnahmen (10a, 10b) des Magazins (6) absenkbar bzw. von diesen Aufnahmen (10a, 10b) anhebbar ist.

4. Vorrichtung nach Anspruch 2 oder 3, **dadurch gekennzeichnet, daß** ein einziges über der Fahrzeugkarosserie (1) angeordnetes Magazin (6) für Spannrahmen (5a, 5b, 5c) vorgesehen ist, bei welchem jedem Hebeschlitten (12) zumindest zwei Aufnahmepositionen für Spannrahmen (5a, 5b, 5c) zugeordnet sind, wobei je einem Spannrahmen (5a, 5b, 5c) für die linke Seite der Fertigungsstraße je ein Spannrahmen (5a, 5b, 5c) der rechten Seite der Fertigungsstraße zugeordnet ist.

5. Vorrichtung nach Anspruch 3 und 4, **dadurch gekennzeichnet, daß** die Spannrahmenwechselpositionen symmetrisch zur Längsmittelebene der Fertigungsstraße und die Aufnahmepositionen einander zugeordneter Spannrahmen (5a, 5b, 5c) des Magazins (6) in äquidistanten Abständen voneinander angeordnet sind, wobei diese Abstände dem Abstand zwischen den Spannrahmenwechselpositionen entsprechen.

6. Vorrichtung nach einem der Ansprüche 1 bis 5, **dadurch gekennzeichnet, daß** die Hebeschlitten (12) von dem Bearbeitungsniveau nach oben ragenden Schienen (14) verfahrbar sind, wobei die Schienen (14) bezüglich der Längsmittelebene der Fertigungsstraße symmetrisch angeordnet sind, und daß die Querschlitten (11) bzw. Führungseinrichtungen (13) für die Querschlitten (11) normal zu diesen Schienen (14) verfahrbar sind.

7. Vorrichtung nach Anspruch 6, **dadurch gekennzeichnet, daß** die Schienen bezüglich der Vertikalen nach oben und von der Karosserie weg geneigt verlaufend angeordnet sind, und daß die Querschlitten (11) bzw. Führungseinrichtungen (13) um je eine parallel zur Fertigungsstraße ausgerichtete Achse (A) verschwenkbar sind, sodaß die Spannrahmen (5a, 5b, 5c) in einer geneigten Position übergeben und angehoben bzw. abgesenkt werden.

8. Vorrichtung nach einem der Ansprüche 1 bis 7, **dadurch gekennzeichnet, daß** das Mittel zum Verriegeln bzw. Entriegeln des Spannrahmens durch eine betätigbare Haltevorrichtung oder Verriegelungsbolzen gebildet wird, welche sowohl an dem Querals auch an dem Hebeschlitten angeordnet sind und in zugeordnete Aufnahmen für die Haltevorrichtungen bzw. Verriegelungsbohrungen des Spannrahmens eingreifen, wobei an jedem Spannrahmen zumindest zwei Aufnahmen für die Haltevorrichtungen oder Verriegelungsbohrungen und an jedem Quer- bzw. Hebeschlitten zumindest je zwei Haltevorrichtungen bzw. Verriegelungsbolzen vorgesehen sind.

9. Vorrichtung nach einem der Ansprüche 1 bis 8, **dadurch gekennzeichnet, daß** jeder Spannrahmen eine Energieversorgung, z.B. für elektrische u. hydraulische od. pneumatische Energie, aufweist, welche bei Übergabe des Spannrahmens (5a, 5b, 5c) von dem Hebe- (12) auf den Querschlitten (11) über eine Kupplung, z.B. eine Multikupplung, an den Querschlitten ankoppelbar ist.

10. Vorrichtung nach einem der vorigen Ansprüche, **dadurch gekennzeichnet, daß** in der Bearbeitungsstation (2) eine Arbeitsposition für den Spannrahmen (5a, 5b, 5c) vorgesehen ist, an welcher der Spannrahmen mit der Bearbeitungsstation exakt ausgerichtet und an dieser verankert ist, wobei im Bereich der Arbeitsposition des Spannrahmens (5a, 5b, 5c) ein Mittel zur Gewichtsentlastung des Spannrahmens in Abhängigkeit von seinem Gewicht vorgesehen ist, welches in Abhängigkeit von dem vorbestimmten Gewicht des aktuellen Spannrahmens angesteuert ist.

11. Vorrichtung nach Anspruch 7 und 11, **dadurch gekennzeichnet, daß das** Mittel zur Gewichtsentlastung als ein Abschnitt der Führungseinrichtung (13) des Querschlittens (11) ausgebildet und die Gewichtsentlastung durch Verschwenken dieser Führungseinrichtung um die parallel zur Fertigungsrichtung verlaufende Längsachse (A) durchführbar ist.

## Claims

1. An apparatus for feeding, positioning and welding components of a car body (1) in a machining station (2) of an assembly line in which at least one changeable clamping frame (5a, 5b, 5c) is provided on each side of the assembly line for feeding and positioning the body components, each clamping frame (5a, 5b, 5c) being moveable transverse to the assembly line and being liftable and at least one magazine (6) being provided for storing the clamping frames (5a, 5b, 5c), at least some portions of the magazine (6) being arranged above the machining level of the car body (1), **characterized in that** one driven cross slide rest (11) is provided on each side of the assembly line for moving the clamping frames (5a, 5b, 5c) transverse to the assembly line, each cross slide rest (11) being able to receive one clamping frame (5a, 5b, 5c) in such a way that it can be detached and locked; one driven lifting slide (12) is provided on each side of the assembly line for lifting the clamping frame (5a, 5b, 5c), the lifting slide (12) being able to travel upwards or downwards along at least one guiding device (14) and being able to receive a clamping frame (5a, 5b, 5c); and a transfer position is provided in the area of the intersection of the travelling direction of one cross slide rest (11) and of the related lifting slide (12), a means for unlocking or locking of the clamping frame (5a, 5b, 5c) being provided at least on the cross slide rest (11) for transferring a clamping frame (5a, 5b, 5c) from the cross slide rest (11) to the lifting slide (12) or vice versa.

2. The apparatus according to Claim 1, wherein at least one magazine (6) for clamping frames (5a, 5b, 5c) which is movable transverse to the assembly line is arranged above the machining level of the car body (1), the magazine (6) comprising receiving devices (10a, 10b) for at least two clamping frames (5a, 5b, 5c) for each side of the assembly line.

3. The apparatus according to Claim 2, **wherein** in the area of the intersection of the travelling direction of the lifting slide (12) and the clamping-frame magazine (6) a clamping-frame changing position is provided in which the clamping frame can be lowered to, or lifted from, suitable receiving devices (10a, 10b) of the magazine (6).

4. The apparatus according to Claims 2 or 3, **wherein** one magazine (6) for clamping frames (5a, 5b, 5c) which is arranged above the car body (1) is provided, at least two receiving positions for clamping frames (5a, 5b, 5c) in the magazine (6) being associated to each lifting slide (12), one clamping frame (5a, 5b, 5c) of the right side of the assembly line being associated to one clamping frame (5a, 5b, 5c) of the left side of the assembly line.

5. The apparatus according to Claims 3 and 4, **wherein** the clamping-frame changing positions are arranged symmetrically to the longitudinal center plane of the assembly line and the receiving positions of clamping frames (5a, 5b, 5c) of the magazine (6) which are associated to each other are arranged equidistantly from each other, these distances corresponding to the distance between the clamping-frame changing positions.

6. The apparatus according to any one of Claims 1 to 5, wherein the lifting slides (12) can travel on rails (14) extending upwards from the machining level, the rails (14) being arranged symmetrically to the longitudinal center plane of the assembly line, and **wherein** the cross slide rests (11) or the guiding devices (13) for the cross slide rests (11) can travel normal to said rails (14).

7. The apparatus according to Claim 6, **wherein** the rails are arranged upwards in relation to the vertical line and in such a way that they extend away from the car body in an inclined manner, and wherein the cross slide rests (11) or guiding devices (13) are pivoted around one axis (A) each, aligned parallel to the assembly line, so that the clamping frames (5a, 5b, 5c) are transferred and lifted or lowered in an inclined position.

8. The apparatus according to any one of Claims 1 to 7, **wherein** the means for locking or unlocking the clamping frame is composed of an operable holding device or locking bolt which are arranged on both the cross slide rest and the lifting slide and engage in associated receivers for the holding devices or locking bolts of the clamping frame, at least two receivers for the holding devices or locking bolts being provided on each clamping frame and at least two holding devices or locking bolts being provided on each cross slide rest or lifting slide.

9. The apparatus according to any one of Claims 1 to 8, **wherein** each clamping frame comprises a power supply, e. g. for electric and hydraulic or pneumatic energy, which can be coupled to the cross slide rest (11) via a coupling such as a multicoupling when the clamping frame (5a, 5b, 5c) is transferred to the lifting slide (12) from the cross slide rest (11).

10. The apparatus according to any one of the preceding claims, **wherein** a working position for the clamping frame (5a, 5b, 5c) is provided in the machining station (2), the clamping frame being exactly aligned to and being anchored to the machining station in said working position, a means for reducing the weight of the clamping frame (5a, 5b, 5c) in dependence on its weight being provided in the area of the working position of the clamping frame, the means being driven in dependence on the predetermined weight of the current clamping frame.

11. The apparatus according to any Claims 7 and 10, wherein the means for weight reduction is formed as a section of the guiding device (13) of the cross slide rest (11) and the weight reduction can be performed by pivoting said guiding device around the longitudinal axis (A) extending parallel to the direction of production.

## Revendications

1. Dispositif pour amener, positionner et souder des parties d'une carrosserie de véhicule (1) dans un poste d'usinage (2) d'une chaîne de fabrication, dispositif pour lequel, pour amener et positionner les parties de carrosserie, des deux côtés de la chaîne de fabrication est chaque fois prévu au moins un cadre de fixation (5a, 5b, 5c) remplaçable, chaque cadre de fixation (5a, 5b, 5c) étant déplaçable et levable transversalement par rapport à la chaîne de fabrication et, pour la conservation des cadres de fixation (5a, 5b, 5c), est prévu au moins un magasin (6), disposé, au moins par tronçons, au-dessus du niveau de travail de la carrosserie de véhicule (1), **caractérisé en ce que** pour déplacer les cadres de fixation (5a, 5b, 5c) transversalement par rapport à la chaîne de fabrication des deux côtés est chaque fois prévu un coulisseau transversal (11) entraîné, sur chacun desquels un cadre de fixation (5a, 5b, 5c) peut être supporté de façon désolidarisable et verrouillable, **en ce que**, pour soulever le cadre de fixation (5a, 5b, 5c) des deux côtés de la chaîne de fabrication, est prévu un coulisseau de levage (12) entraîné, qui est déplaçable vers le haut ou vers le bas, le long d'au moins un dispositif de guidage (14), et sur lequel un cadre de fixation (5a, 5b, 5c) peut être supporté, et **en ce que**, dans la zone du point d'intersection de la direction de déplacement d'un coulisseau transversal (11) et du coulisseau dé levage (12) associé, est prévue une position de transfert, à laquelle, pour transférer un cadre de fixation (5a, 5b, 5c) du coulisseau transversal (11) au coulisseau de levage (12), ou inversement, au moins sur le coulisseau transversal (11) est prévu un moyen de déverrouillage ou de verrouillage du cadre de fixation (5a, 5b, 5c).

2. Dispositif selon la revendication 1, **caractérisé en ce que**, au-dessus du niveau de travail de la carrosserie de véhicule (1), au moins un magasin (6) à cadre de fixation (5a, 5b, 5c), magasin déplaçable transversalement par rapport à la chaîne de fabrication, est disposé et présente des dispositifs support (10a, 10b) pour au moins chaque fois deux cadres de fixation (5a, 5b, 5c), pour chaque côté de la chaîne de fabrication (5a, 5b, 5c).

3. Dispositif selon la revendication 2, **caractérisé en ce que**, dans la zone du point d'intersection de la direction de déplacement du coulisseau de levage (12) et du magasin à cadre de fixation (6), est prévue une position de changement de cadre de fixation, à laquelle le cadre de fixation est susceptible d'être abaissé, pour être placé sur des logements (10a, 10b) appropriés du magasin (6), ou bien est susceptible d'être levé depuis ces logements (10a, 10b).

4. Dispositif selon la revendication 2 ou 3, **caractérisé en ce qu'**un magasin (6) unique, disposé au-dessous de carrosserie de véhicule (1) pour les cadres de fixation (5a, 5b, 5c), est prévu, pour lequel, à chaque coulisseau de levage (12) sont associées au moins deux positions de supportage pour les cadres de fixation (5a, 5b, 5c), sachant que, chaque fois, un cadre de fixation (5a, 5b, 5c) prévu pour le côté gauche de la chaîne de fabrication est associé respectivement à un cadre de fixation (5a, 5b, 5c) du côté droit de la chaîne de fabrication.

5. Dispositif selon les revendications 3 et 4, **caractérisé en ce que** les positions de changement de cadre de fixation sont disposées symétriquement par rapport au plan médian longitudinal de la chaîne de fabrication et les positions support, des cadres de fixation (5a, 5b, 5c), associés les uns les autres, du magasin (6), sont disposées sous des espacements équidistants les unes par rapport aux autres, ces espacements correspondant à l'espacement que l'on a entre les positions de changement de cadre de fixation.

6. Dispositif selon l'une des revendications 1 à 5, **caractérisé en ce que** les coulisseaux de levage (12) sont déplaçables par les glissières (14) faisant saillie vers le haut depuis le niveau de travail, les glissières (14) étant disposées symétriquement par rapport au plan médian longitudinal de la chaîne de fabrication, et **en ce que** les coulisseaux transversaux (11) ou les dispositifs de guidage (13) prévus pour les coulisseaux transversaux (11) sont déplaçables perpendiculairement par rapport à ces glissières (14).

7. Dispositif selon la revendication 6, **caractérisé en ce que** les glissières sont disposées en étant inclinées vers le haut par rapport à la verticale et en s'écartant de la carrosserie, et **en ce que** les coulisseaux transversaux (11) ou les dispositifs de guidage (13) sont susceptibles de pivoter autour d'un axe (A), chaque fois orienté parallèlement à la chaîne de fabrication, de sorte que les cadres de fixation (5a, 5b, 5c) sont transférés et levés ou abaissésn en étant placés en une position inclinée.

8. Dispositif selon l'une des revendications 1 à 7, **caractérisé en ce que** les moyens de verrouillage ou de déverrouillage du cadre de fixation sont formés par un dispositif de maintien actionnable ou un boulon de verrouillage, qui sont disposés tant sur le coulisseau transversal qu'également sur le coulisseau de levage et s'engagent dans des logements associés prévus pour les dispositifs de maintien ou les dispositifs de verrouillage du cadre de fixation, sur chaque cadre de fixation étant disposés au moins deux logements pour les dispositifs de maintien ou les dispositifs de verrouillage et, sur chaque coulisseau transversal ou coulisseau de levage, étant prévus au moins chaque fois deux dispositifs de maintien ou boulons de verrouillage.

9. Dispositif selon l'une des revendications 1 à 8, **caractérisé en ce que** chaque cadre de fixation présente une alimentation en énergie, par exemple pour de l'énergie électrique et hydraulique ou pneumatique, qui est susceptible d'être accouplé au chariot transversal en cas de transfert du cadre de fixation (5a, 5b, 5c) du coulisseau de levage (12) au coulisseau transversal (11), par l'intermédiaire d'un raccord d'accouplement, par exemple un multiraccord.

10. Dispositif selon l'une des revendications précédentes, **caractérisé en ce que**, au poste d'usinage (2), est prévue une position de travail pour le cadre de fixation (5a, 5b, 5c), à laquelle le cadre de fixation est orienté précisément avec le poste d'usinage et est ancré sur celui-ci, sachant que, dans la zone de la position de travail du cadre de fixation (5a, 5b, 5c), est prévu un moyen de décharge du poids du cadre de fixation, en fonction de son poids, qui est commandé en fonction du poids prédéterminé du cadre de fixation réel.

11. Dispositif selon les revendications 7 et 10, **caractérisé en ce que** des moyens de décharge du poids sont réalisés sous la forme d'un découpage du dispositif de guidage (13) du coulisseau transversal (11) et la décharge de poids pouvant être effectuée par pivotement de ce dispositif de guidage autour de l'axe longitudinal (A) s'étendant parallèlement à la direction de la fabrication.
